(19) 

Europäisches
Patentamt
European
Patent Office
Office européen
des brevets

(11) **EP 4 428 498 A1**

(12) **EUROPEAN PATENT APPLICATION**
published in accordance with Art. 153(4) EPC

(43) Date of publication:
**11.09.2024 Bulletin 2024/37**

(21) Application number: **22906112.2**

(22) Date of filing: **07.11.2022**

(51) International Patent Classification (IPC):
***G01D 21/02*** (2006.01)

(52) Cooperative Patent Classification (CPC):
**G01K 7/16; G01D 21/02; G01K 1/26; G01K 13/20**

(86) International application number:
**PCT/CN2022/130299**

(87) International publication number:
**WO 2023/109360 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2021 CN 202111519419**

(71) Applicant: **Huawei Technologies Co., Ltd.
Shenzhen, Guangdong 518129 (CN)**

(72) Inventors:
• **CHEN, Baoyang
Shenzhen, Guangdong 518129 (CN)**
• **LIU, Chuangchuang
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **MULTIFUNCTIONAL SENSOR AND DEVICE**

(57) A multifunctional sensor and a device are disclosed. The multifunctional sensor may be used on a surface of a device, for example, a surface of a wearable device, and include a substrate (201) and a sensitive layer (202). The sensitive layer (202) is located on the substrate (201). The sensitive layer (202) includes at least two different sensitive elements (1, 2, ..., n) for responding to at least two different types of ambient signals. The sensitive elements (1, 2, ..., n) are in linear structures, and the linear structures are arranged at equal spacings. The sensitive layer (202) further includes at least two electrode pairs for connecting to a readout circuit. One electrode pair corresponds to one sensitive element (1, 2, ..., n). The readout circuit is configured to obtain measured values respectively corresponding to the at least two different sensitive elements (1, 2, ..., n). Different types of sensitive elements (1, 2, ..., n) are designed as linear structures at equal spacings to ensure consistency of the different sensitive elements (1, 2, ..., n) in a sensing region. During use, specific values of a plurality of ambient signals, from which noise interference has been removed, of the multifunctional sensor are calculated based on the measured values obtained by the readout circuit. In this way, a plurality of sensing values can be simultaneously measured on the surface of the device at a time.

FIG. 2

## Description

This application claims priority to Chinese Patent Application No. 202111519419.4, filed with the China National Intellectual Property Administration on December 13, 2021 and entitled "MULTIFUNCTIONAL SENSOR AND DEVICE", which is incorporated herein by reference in its entirety.

## TECHNICAL FIELD

This application relates to the field of sensing technologies, and in particular, to a multifunctional sensor and a device.

## BACKGROUND

Sensors, such as a temperature sensor and a pressure sensor, have been widely used in various electronic devices. However, most sensors are packaged in an electronic device to avoid interference from noise. For example, most common temperature sensors, such as a negative temperature coefficient (negative temperature coefficient, NTC) thermistor and a temperature IC, are connected to a related processor or analog-to-digital converter (analog-to-digital converter, ADC) as internal components of an electronic device. For another example, common pressure sensors, such as a resistive pressure sensor and a capacitive pressure sensor, are usually designed in an electronic device to minimize interference from other ambient factors.

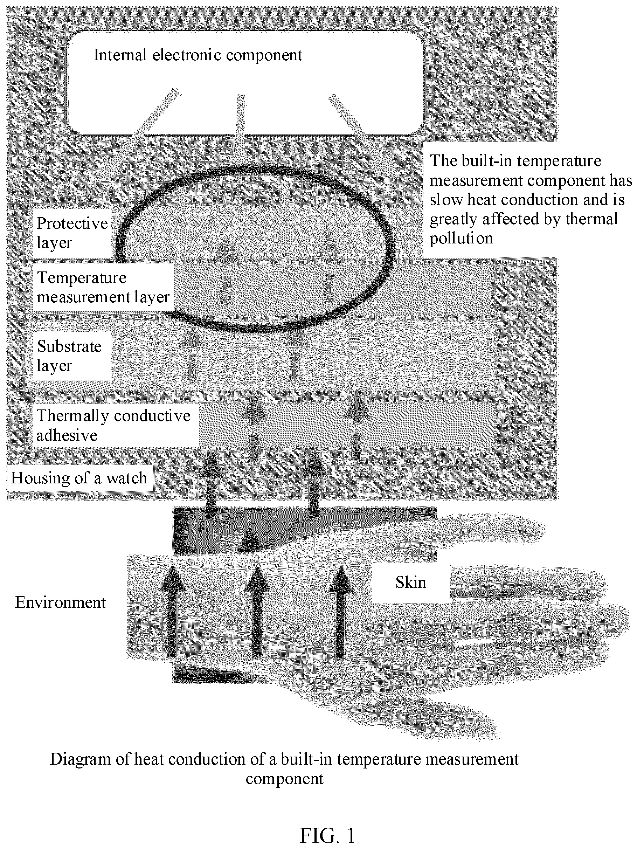

However, because most sensors are mounted in an electronic device, the foregoing conventional sensors have significant disadvantages in a wearable device or other scenarios. For example, a temperature sensor is usually mounted in a current wearable wrist temperature detection apparatus. As shown in FIG. 1, a heat conduction path is as follows: skin → stainless steel → flexible printed circuit (flexible printed circuit, FPC) → temperature sensor.

The foregoing sensor has the following disadvantages: The heat conduction path is excessively complex. Consequently, during measurement of skin temperature, temperature can be accurately measured only when all media in the heat conduction path reach measured temperature through heat conduction. In addition, thermal pollution, such as heating of a battery in an electronic component, has greater impact on the temperature sensor than skin of a to-be-measured object. Therefore, heating of a device and the like are likely to interfere with the measurement. Similarly, provided that a sensor is mounted in an electronic device, disadvantages similar to the foregoing disadvantages occur, reducing measurement accuracy.

## SUMMARY

Embodiments of this application provide a multifunctional sensor that may be used on a surface of a device. The multifunctional sensor integrates a plurality of types of sensitive elements. One sensitive element has different response sensitivity to different ambient signals (for example, temperature, humidity, and pressure), and different sensitive elements have different response sensitivity to one ambient signal. In addition, the plurality of different types of sensitive elements are designed as linear structures at equal spacings to ensure consistency of the different sensitive elements in a sensing region. During use, specific values of a plurality of ambient signals, from which noise interference has been removed, of the multifunctional sensor are calculated based on measured values obtained by a readout circuit. In this way, a plurality of sensing values can be simultaneously accurately measured at a time.

Based on this, embodiments of this application provide the following technical solutions.

According to a first aspect, embodiments of this application first provide a multifunctional sensor. The multifunctional sensor may specifically include a substrate and a sensitive layer. The sensitive layer is located on the substrate. The sensitive layer includes at least two different sensitive elements. The at least two different sensitive elements are located on one plane of the sensitive layer. The "different" means that the sensitive elements are made of different materials and are configured to respond to at least two different types of ambient signals. For example, the ambient signal may be temperature (for example, body temperature of a person or temperature of air in an environment), humidity (for example, humidity of a person or humidity of air in an environment), pressure, or the like. This is not specifically limited in this application, and is determined based on a material of which the sensitive element is made. The at least two different sensitive elements are in linear structures, and every two of the linear structures are arranged at equal spacings. It should be noted herein that, that every two of the linear structures are arranged at equal spacings means that distances between lines corresponding to any two sensitive elements are equal everywhere (to be specific, the lines are parallel). The "equal everywhere" herein means being equal everywhere in a theoretical case. In actual application, when a fluctuation of distances between lines corresponding to any two sensitive elements is within a preset error range (for example, ±5 mm), it may also be considered that the distances are equal everywhere. A linear structure corresponding to each sensitive element may be any linear structure, and may be a line formed by a plurality of line segments, or may be in a serpentine shape, or may be a line in any shape. A line shape of the sensitive element is not limited in this application. It should be further noted herein that, to make measurement sensitivity higher, a thickness of the linear structure corresponding to each sensitive element may also be set to meet a specific requirement. For example, the thickness of the linear structure ranges from 1 $\mu$m to 1000 $\mu$m. In addition, every two of the at least two different sensitive elements are insulated from each other; one sensitive element has different response sensitivity to different types of ambient signals, for example, some materials have high sensitivity to temperature but low sensitivity to humidity; and different sensitive elements have different response sensitivity to one type of ambient signal, for example, some materials have high sensitivity to temperature, and some materials have low sensitivity to temperature. In addition, the sensitive layer further includes at least two electrode pairs for connecting to a readout circuit. One electrode pair corresponds to one sensitive element (this is a one-to-one correspondence). One electrode pair includes one positive electrode and one negative electrode that are respectively connected to two ends of a line corresponding to a sensitive element that corresponds to the electrode pair. For example, one positive electrode and one negative electrode that are included in a target electrode pair may be respectively connected to two ends of a linear structure corresponding to a target sensitive element. The target electrode pair is one of the at least two electrode pairs. The target sensitive element is one of the at least two different sensitive elements. The readout circuit is configured to obtain measured values respectively corresponding to the at least two different sensitive elements. One sensitive element corresponds to one measured value (this is a one-to-one correspondence).

In the foregoing implementation of this application, a multifunctional sensor is provided. The multifunctional sensor integrates a plurality of types of sensitive elements. One sensitive element has different response sensitivity to different ambient signals (for example, temperature, humidity, and pressure), and different sensitive elements have different response sensitivity to one ambient signal. In addition, the plurality of different types of sensitive elements are designed as linear structures at equal spacings to ensure consistency of the different sensitive elements in a sensing region. During use, specific values of a plurality of ambient signals, from which noise interference has been removed, of the multifunctional sensor are calculated based on measured values obtained by a readout circuit. In this way, a plurality of sensing values can be simultaneously accurately measured at a time.

In a possible implementation of the first aspect, the readout circuit is connected to a calculation module, and the calculation module is configured to calculate a value of a target ambient signal based on a target measured value and a target transform coefficient. The target measured value is one or more of the measured values respectively corresponding to the at least two different sensitive elements. The target transform coefficient is one or more of transform coefficients respectively corresponding to the at least two different sensitive elements. The target ambient signal is one or more of the at least two different types of ambient signals. The transform coefficient is a preset coefficient. It should be noted herein that both the readout circuit and the calculation module may be located in the device.

In the foregoing implementation of this application, values of one or more ambient signals may be obtained at a time through data decoupling between a plurality of sensitive elements, and common impact of these types of to-be-measured ambient data on a plurality of sensitive elements is also eliminated based on a difference between sensitivity of different sensitive elements. For example, temperature affects a sensitive element sensitive to humidity, but more seriously affects a sensitive element sensitive to temperature. Two groups of observed values are corrected based on each other to obtain a more accurate observed humidity value that is not affected by temperature and a more accurate observed temperature value that is not affected by humidity.

In a possible implementation of the first aspect, the type of the ambient signal may be temperature (for example, body temperature of a person or temperature of air in an environment), humidity (for example, humidity of a person or humidity of air in an environment), pressure, or the like. This is not specifically limited in this application, and is determined based on a material of which the sensitive element is made.

In the foregoing implementation of this application, several typical types of ambient signals are specifically described, and measurement types are diversified. This provides flexibility.

In a possible implementation of the first aspect, a spacing between adjacently arranged linear structures is not greater than 1 centimeter.

In the foregoing implementation of this application, a value range of the spacing between adjacently arranged linear structures is specifically provided. This provides implementability.

In a possible implementation of the first aspect, the multifunctional sensor in this application may be used on a surface of a device, to improve measurement sensitivity to an external ambient signal. For example, the multifunctional sensor may be specifically used on a surface of a wearable device. Alternatively, the multifunctional sensor may be used in a device (for example, an electronic device), to improve measurement sensitivity for detecting temperature, humidity, pressure, or the like in the device. This is not specifically limited in this application.

In the foregoing implementation of this application, the multifunctional sensor in this application may be used on a surface of a device, or may be used in a device, to improve measurement sensitivity. This provides high applicability.

In a possible implementation of the first aspect, a specific application scenario in which the sensor is used on a surface of a device may include but is not limited to the following: (1) When the device is a watch, the multifunctional sensor is disposed on an outer surface at the bottom of a body of the watch, or the multifunctional sensor is disposed on an outer surface of a clasp of the watch, or the multifunctional sensor is disposed at a first preset location on a band of the watch. A specific disposing location is not limited in this application. (2) When the device is a headset, the multifunctional sensor is disposed at a second preset location on a surface of a body of the headset, where the second preset location is a location at which the headset is in contact with a tragus when the headset is worn. (3) When the device is glasses, the multifunctional sensor is disposed at a third preset location on a surface of a nose pad of the glasses, where the third preset location is a location at which the glasses are in contact with a wing of a nose when the glasses are worn.

In the foregoing implementation of this application, several typical application scenarios in which the multifunctional sensor is used on a surface of a device are specifically described. This provides implementability.

In a possible implementation of the first aspect, the sensitive layer may be generated on the substrate through sputtering, or the sensitive layer may be deployed on the substrate through bonding, or the sensitive layer may be generated on the substrate through deposition. An implementation of deploying the sensitive layer on the substrate is not specifically limited in this application.

In the foregoing implementation of this application, the sensitive layer may be generated on the substrate in a plurality of manners, and a manner may be selected according to a requirement. This provides selectivity.

In a possible implementation of the first aspect, at least two different sensitive materials may be made into the linear structures through photoetching, or at least two different sensitive materials may be made into the linear structures through masking. An implementation of making the sensitive elements into the linear structure is not specifically limited in this application.

In the foregoing implementation of this application, the at least two different sensitive materials may be made into the linear structures in a plurality of manners, and a manner may be selected according to a requirement. This provides flexibility.

In a possible implementation of the first aspect, the measured value obtained by the readout circuit may be a resistance value, a capacitance value, a voltage value, a current value, or the like. This is specifically determined based on a type of the multifunctional sensor. For example, assuming that the multifunctional sensor is a resistive sensor, the measured value obtained by the readout circuit is a resistance value. Similarly, assuming that the multifunctional sensor is a capacitive sensor, the measured value obtained by the readout circuit is a capacitance value. A case in which the measured value is a voltage value or a current value is similar. Details are not described herein again.

In the foregoing implementation of this application, there may be a plurality of types of measured values. This provides flexibility.

In a possible implementation of the first aspect, in addition to the substrate and the sensitive layer, the multifunctional sensor may further include a protective layer. The protective layer may be one or more layers of thin film materials, to be specific, a thin film protective layer formed on the substrate and the sensitive layer, and is configured to protect the substrate and the sensitive layer. For example, during preparation of the multifunctional sensor, the protective layer may protect a piezoelectric material (assuming that one of the sensitive elements is the piezoelectric material) and a corresponding electrode from oxidation during subsequent high-temperature polycrystalline silicon deposition.

In the foregoing implementation of this application, that the multifunctional sensor may further include the protective layer to protect the substrate and the sensitive layer is specifically described. This improves stability of the multifunctional sensor.

In a possible implementation of the first aspect, a material of the protective layer may include but is not limited to aluminum oxide, chromium oxide, and the like.

In the foregoing implementation of this application, the protective layer may be made of a plurality of materials, and a specific material to be selected may be determined according to a requirement. This provides flexibility.

In a possible implementation of the first aspect, because the sensitive layer includes at least two different sensitive elements, the sensitive layer includes a plurality of materials sensitive to different to-be-measured physical properties. The materials include but are not limited to metal, an alloy, an organic polymer material, and the like. For example, the materials include but are not limited to a temperature-sensitive platinum Pt or NTC material, a pressure-sensitive constantan material, and the like. It should be noted that the at least two different sensitive elements included in the sensitive layer may belong to different subtypes of one type of material. In an example, it is assumed that the sensitive layer includes two different sensitive elements that both belong to a metal material but respectively belong to copper and platinum in the type of metal. In another example, it is assumed that the sensitive layer includes two different sensitive elements that both belong to an alloy material but respectively belong to a copper-nickel alloy (also referred to as constantan) and a nickel-chromium-iron alloy in the type of alloy. The at least two different sensitive elements included in the sensitive layer may alternatively belong to different types of materials. In an example, it is assumed that the sensitive layer includes two different sensitive elements that respectively belong to copper in a metal material and a nickel-chromium-iron alloy in an alloy material. Detailed examples are not described herein again.

In the foregoing implementation of this application, the sensitive element may be made of a plurality of materials, and a specific material to be selected may be determined according to a requirement. This provides flexibility.

In a possible implementation of the first aspect, the substrate may be made of a plurality of materials, including but not limited to silicon, sapphire, stainless steel, plastic, and the like.

In the foregoing implementation of this application, the substrate may be made of a plurality of materials, and a specific material to be selected may be determined according to a requirement. This provides flexibility.

A second aspect of embodiments of this application further provides a multifunctional sensor. The multifunctional sensor includes a substrate and a sensitive layer. The sensitive layer is located on the substrate. The sensitive layer includes at least two different sensitive elements. The at least two different sensitive elements are located on one plane of the sensitive layer. The "different" means that the sensitive elements are made of different materials and are configured to respond to at least two different types of ambient signals. For example, the ambient signal may be temperature (for example, body temperature of a person or temperature of air in an environment), humidity (for example, humidity of a person or humidity of air in an environment), pressure, or the like. This is not specifically limited in this application, and is determined based on a material of which the sensitive element is made. The at least two different sensitive elements are located in at least two different regions on the substrate, and one sensitive element is located in one region. For example, assuming that there are three sensitive elements, correspondingly, there are three different regions (to be specific, the regions have no intersection) on the substrate. Each sensitive element is located in one region, and a distance between center points of the at least two different regions is less than a first preset threshold. The first preset threshold may be set according to a requirement. It should be noted that the region is a region with a diameter greater than a preset value (not including a region in a linear shape). For example, a value range of a diameter of each region may be set to 0.1 mm to 100 mm. A specific range may be set based on actual application. This is not limited herein. In addition, every two of the at least two different sensitive elements are insulated from each other; one sensitive element has different response sensitivity to different types of ambient signals, for example, some materials have high sensitivity to temperature but low sensitivity to humidity; and different sensitive elements have different response sensitivity to one type of ambient signal, for example, some materials have high sensitivity to temperature, and some materials have low sensitivity to temperature. In addition, the sensitive layer further includes at least two electrode pairs for connecting to a readout circuit. One electrode pair corresponds to one sensitive element (this is a one-to-one correspondence). One electrode pair includes one positive electrode and one negative electrode that are respectively connected to two ends of a line corresponding to a sensitive element that corresponds to the electrode pair. For example, one positive electrode and one negative electrode that are included in a target electrode pair may be respectively connected to two ends of a linear structure corresponding to a target sensitive element. The target electrode pair is one of the at least two electrode pairs. The target sensitive element is one of the at least two different sensitive elements. The readout circuit is configured to obtain measured values respectively corresponding to the at least two different sensitive elements. One sensitive element corresponds to one measured value (this is a one-to-one correspondence).

In the foregoing implementation of this application, a multifunctional sensor is provided. The multifunctional sensor integrates a plurality of types of sensitive elements. One sensitive element has different response sensitivity to different ambient signals (for example, temperature, humidity, and pressure), and different sensitive elements have different response sensitivity to one ambient signal. In addition, the plurality of different types of sensitive elements are designed to be located in different regions on the substrate, and a distance between center points of different regions is less than the first preset threshold. This ensures consistency of the different sensitive elements in a sensing region. During use, specific values of a plurality of ambient signals, from which noise interference has been removed, of the multifunctional sensor are calculated based on measured values obtained by a readout circuit. In this way, a plurality of sensing values can be simultaneously accurately measured at a time.

In a possible implementation of the second aspect, shapes of the at least two different sensitive elements include at least any one of the following: a linear shape, a polygonal shape, a circular shape, and an elliptic shape.

In the foregoing implementation of this application, that the sensitive element may be in various shapes is specifically described. Because a distance between center points is limited, a shape of the sensitive element may not be limited. This provides flexibility.

In a possible implementation of the second aspect, the readout circuit is connected to a calculation module, and the calculation module is configured to calculate a value of a target ambient signal based on a target measured value and a target transform coefficient. The target measured value is one or more of the measured values respectively corresponding to the at least two different sensitive elements. The target transform coefficient is one or more of transform coefficients respectively corresponding to the at least two different sensitive elements. The target ambient signal is one or more of the at least two different types of ambient signals. The transform coefficient is a preset coefficient. It should be noted herein that both the readout circuit and the calculation module may be located in the device.

In the foregoing implementation of this application, values of one or more ambient signals may be obtained at a time through data decoupling between a plurality of sensitive elements, and common impact of these types of to-be-measured ambient data on a plurality of sensitive elements is also eliminated based on a difference between sensitivity of different sensitive elements. For example, temperature affects a sensitive element sensitive to humidity, but more seriously affects a sensitive element sensitive to temperature. Two groups of observed values are corrected based on each other to obtain a more accurate observed humidity value that is not affected by temperature and a more accurate observed temperature value that is not affected by humidity.

In a possible implementation of the second aspect, the type of the ambient signal may be temperature (for example, body temperature of a person or temperature of air in an environment), humidity (for example, humidity of a person or humidity of air in an environment), pressure, or the like. This is not specifically limited in this application, and is determined based on a material of which the sensitive element is made.

In the foregoing implementation of this application, several typical types of ambient signals are specifically described, and measurement types are diversified. This provides flexibility.

In a possible implementation of the second aspect, the first preset threshold is not greater than 1 centimeter.

In the foregoing implementation of this application, a value range of the first preset threshold is specifically provided. This provides implementability.

In a possible implementation of the second aspect, the multifunctional sensor in this application may be used on a surface of a device, to improve measurement sensitivity to an external ambient signal. For example, the multifunctional sensor may be specifically used on a surface of a wearable device. Alternatively, the multifunctional sensor may be used in a device (for example, an electronic device), to improve measurement sensitivity for detecting temperature, humidity, pressure, or the like in the device. This is not specifically limited in this application.

In the foregoing implementation of this application, the multifunctional sensor in this application may be used on a surface of a device, or may be used in a device, to improve measurement sensitivity. This provides high applicability.

In a possible implementation of the second aspect, a specific application scenario in which the sensor is used on a surface of a device may include but is not limited to the following: (1) When the device is a watch, the multifunctional sensor is disposed on an outer surface at the bottom of a body of the watch, or the multifunctional sensor is disposed on an outer surface of a clasp of the watch, or the multifunctional sensor is disposed at a first preset location on a band of the watch. A specific disposing location is not limited in this application. (2) When the device is a headset, the multifunctional sensor is disposed at a second preset location on a surface of a body of the headset, where the second preset location is a location at which the headset is in contact with a tragus when the headset is worn. (3) When the device is glasses, the multifunctional sensor is disposed at a third preset location on a surface of a nose pad of the glasses, where the third preset location is a location at which the glasses are in contact with a wing of a nose when the glasses are worn.

In the foregoing implementation of this application, several typical application scenarios in which the multifunctional sensor is used on a surface of a device are specifically described. This provides implementability.

In a possible implementation of the second aspect, in addition to the substrate and the sensitive layer, the multifunctional sensor may further include a protective layer. The protective layer may be one or more layers of thin film materials, to be specific, a thin film protective layer formed on the substrate and the sensitive layer, and is configured to protect the substrate and the sensitive layer. For example, during preparation of the multifunctional sensor, the protective layer may protect a piezoelectric material (assuming that one of the sensitive elements is the piezoelectric material) and a corresponding electrode from oxidation during subsequent high-temperature polycrystalline silicon deposition.

In the foregoing implementation of this application, that the multifunctional sensor may further include the protective layer to protect the substrate and the sensitive layer is specifically described. This improves stability of the multifunctional sensor.

In a possible implementation of the second aspect, the sensitive layer may be generated on the substrate through sputtering, or the sensitive layer may be deployed on the substrate through bonding, or the sensitive layer may be generated on the substrate through deposition. An implementation of deploying the sensitive layer on the substrate is not specifically limited in this application.

In the foregoing implementation of this application, the sensitive layer may be generated on the substrate in a plurality of manners, and a manner may be selected according to a requirement. This provides selectivity.

In a possible implementation of the second aspect, at least two different sensitive materials may be made into the linear structures through photoetching, or at least two different sensitive materials may be made into the linear structures through masking. An implementation of making the sensitive elements into the linear structure is not specifically limited in this application.

In the foregoing implementation of this application, the at least two different sensitive materials may be made into the linear structures in a plurality of manners, and a manner may be selected according to a requirement. This provides flexibility.

In a possible implementation of the second aspect, the measured value obtained by the readout circuit may be a resistance value, a capacitance value, a voltage value, a current value, or the like. This is specifically determined based on a type of the multifunctional sensor. For example, assuming that the multifunctional sensor is a resistive sensor, the measured value obtained by the readout circuit is a resistance value. Similarly, assuming that the multifunctional sensor is a capacitive sensor, the measured value obtained by the readout circuit is a capacitance value. A case in which the measured value is a voltage value or a current value is similar. Details are not described herein again.

In the foregoing implementation of this application, there may be a plurality of types of measured values. This provides flexibility.

In a possible implementation of the second aspect, a material of the protective layer may include but is not limited to aluminum oxide, chromium oxide, and the like.

In the foregoing implementation of this application, the protective layer may be made of a plurality of materials, and a specific material to be selected may be determined according to a requirement. This provides flexibility.

In a possible implementation of the second aspect, because the sensitive layer includes at least two different sensitive elements, the sensitive layer includes a plurality of materials sensitive to different to-be-measured physical properties. The materials include but are not limited to metal, an alloy, an organic polymer material, and the like. For example, the materials include but are not limited to a temperature-sensitive platinum Pt or NTC material, a pressure-sensitive constantan material, and the like. It should be noted that the at least two different sensitive elements included in the sensitive layer may belong to different subtypes of one type of material. In an example, it is assumed that the sensitive layer includes two different sensitive elements that both belong to a metal material but respectively belong to copper and platinum in the type of metal. In another example, it is assumed that the sensitive layer includes two different sensitive elements that both belong to an alloy material but respectively belong to a copper-nickel alloy (also referred to as constantan) and a nickel-chromium-iron alloy in the type of alloy. The at least two different sensitive elements included in the sensitive layer may alternatively belong to different types of materials. In an example, it is assumed that the sensitive layer includes two different sensitive elements that respectively belong to copper in a metal material and a nickel-chromium-iron alloy in an alloy material. Detailed examples are not described herein again.

In the foregoing implementation of this application, the sensitive element may be made of a plurality of materials, and a specific material to be selected may be determined according to a requirement. This provides flexibility.

In a possible implementation of the second aspect, the substrate may be made of a plurality of materials, including but not limited to silicon, sapphire, stainless steel, plastic, and the like.

In the foregoing implementation of this application, the substrate may be made of a plurality of materials, and a specific material to be selected may be determined according to a requirement. This provides flexibility.

A third aspect of embodiments of this application further provides a device. The device may include the pressure sensor according to any one of the first aspect or the possible implementations of the first aspect, or the device may include the multifunctional sensor according to any one of the second aspect or the possible implementations of the second aspect.

In a possible implementation of the third aspect, the multifunctional sensor in this application may be used on a surface of a device, to improve measurement sensitivity to an external ambient signal. For example, the multifunctional sensor may be specifically used on a surface of a wearable device. Alternatively, the multifunctional sensor may be used in a device (for example, an electronic device), to improve measurement sensitivity for detecting temperature, humidity, pressure, or the like in the device. This is not specifically limited in this application.

In the foregoing implementation of this application, the multifunctional sensor in this application may be used on a surface of a device, or may be used in a device, to improve measurement sensitivity. This provides high applicability.

In a possible implementation of the third aspect, a specific application scenario in which the sensor is used on a surface of a device may include but is not limited to the following: (1) When the device is a watch, the multifunctional sensor is disposed on an outer surface at the bottom of a body of the watch, or the multifunctional sensor is disposed on an outer surface of a clasp of the watch, or the multifunctional sensor is disposed at a first preset location on a band of the watch. A specific disposing location is not limited in this application. (2) When the device is a headset, the multifunctional sensor is disposed at a second preset location on a surface of a body of the headset, where the second preset location is a location at which the headset is in contact with a tragus when the headset is worn. (3) When the device is glasses, the multifunctional sensor is disposed at a third preset location on a surface of a nose pad of the glasses, where the third preset location is a location at which the glasses are in contact with a wing of a nose when the glasses are worn.

In the foregoing implementation of this application, several typical application scenarios in which the multifunctional sensor is used on a surface of a device are specifically described. This provides implementability.

## BRIEF DESCRIPTION OF DRAWINGS

FIG. 1 is a diagram of a heat flow during use of a sensor for measuring skin temperature;
FIG. 2 is a diagram of a structure of a multifunctional sensor according to an embodiment of this application;

FIG. 3 is a diagram of another structure of a multifunctional sensor according to an embodiment of this application;

FIG. 4 is a schematic of a structure of an application circuit between a readout circuit and sensitive elements in a multifunctional sensor according to an embodiment of this application;

FIG. 5 is a diagram of another structure of a multifunctional sensor according to an embodiment of this application;

FIG. 6 is a diagram of an example structure of a multifunctional sensor according to an embodiment of this application;

FIG. 7 is a diagram of another structure of a multifunctional sensor according to an embodiment of this application;

FIG. 8 is a diagram of an arrangement manner of a plurality of different sensitive elements according to an embodiment of this application;

FIG. 9 is a diagram of another arrangement manner of a plurality of different sensitive elements according to an embodiment of this application;

FIG. 10 is a diagram a multifunctional sensor disposed on a surface of a device according to an embodiment of this application;

FIG. 11 is another diagram of a multifunctional sensor disposed on a surface of a device according to an embodiment of this application; and

FIG. 12 is another diagram of a multifunctional sensor disposed on a surface of a device according to an embodiment of this application.

## DESCRIPTION OF EMBODIMENTS

Embodiments of this application provide a multifunctional sensor and a device. The multifunctional sensor is used on a surface of a device. The multifunctional sensor integrates a plurality of types of sensitive elements. One sensitive element has different response sensitivity to different ambient signals (for example, temperature, humidity, and pressure), and different sensitive elements have different response sensitivity to one ambient signal. In addition, the plurality of different types of sensitive elements are designed as linear structures at equal spacings to ensure consistency of the different sensitive elements in a sensing region. During use, specific values of a plurality of ambient signals, from which noise interference has been removed, of the multifunctional sensor are calculated based on measured values obtained by a readout circuit. In this way, a plurality of sensing values can be simultaneously accurately measured on the surface of the device at a time.

In the specification, claims, and accompanying drawings of this application, the terms "first", "second", and the like are intended to distinguish between similar objects but do not necessarily indicate a specific order or sequence. It should be understood that the terms used in this way are interchangeable in proper circumstances and are merely intended for distinguishing when objects having a same attribute are described in embodiments of this application. In addition, the terms "include", "have", and any variants thereof are intended to cover a non-exclusive inclusion, so that a process, method, system, product, or device that includes a list of units is not necessarily limited to those units, but may include other units that are not expressly listed or are inherent to the process, method, product, or device.

Embodiments of this application relate to a lot of knowledge about a sensor. To better understand solutions in embodiments of this application, the following first describes related terms and concepts that may be included in embodiments of this application. It should be understood that explanations of related concepts may be limited due to specific cases of embodiments of this application, but this does not mean that this application is limited to the specific cases. Specific cases in different embodiments may also vary. This is not specifically limited herein.

(1) Sensor (transducer/sensor)

The sensor is a detection apparatus capable of sensing measured information and converting, for output, sensed information into an electrical signal or information in another expected form according to a specific rule, to meet requirements for information transmission, processing, storage, display, recording, control, and the like. In embodiments of this application, the measured information that can be sensed by the sensor is referred to as an ambient signal, and the electrical signal or the information in the another expected form into which the sensor converts the information according to the specific rule is obtained by a readout circuit connected to an electrode of the sensor.

The sensor is characterized by being miniature, digital, intelligent, multifunctional, systematic, and network-based. The sensor is a primary step of automatic detection and automatic control. Existence and development of the sensor enable an object to have senses of touch, taste, smell, and the like, and make the object gradually become alive. Sensors are usually classified into 10 types of sensitive elements based on basic sensing functions: a thermo-sensitive element, a light-sensitive element, a gas-sensitive element, a force-sensitive element, a magnetic-sensitive element, a humidity-sensitive element, a noise-sensitive element, a radiation-sensitive element, a color-sensitive element, and a taste-sensitive element.

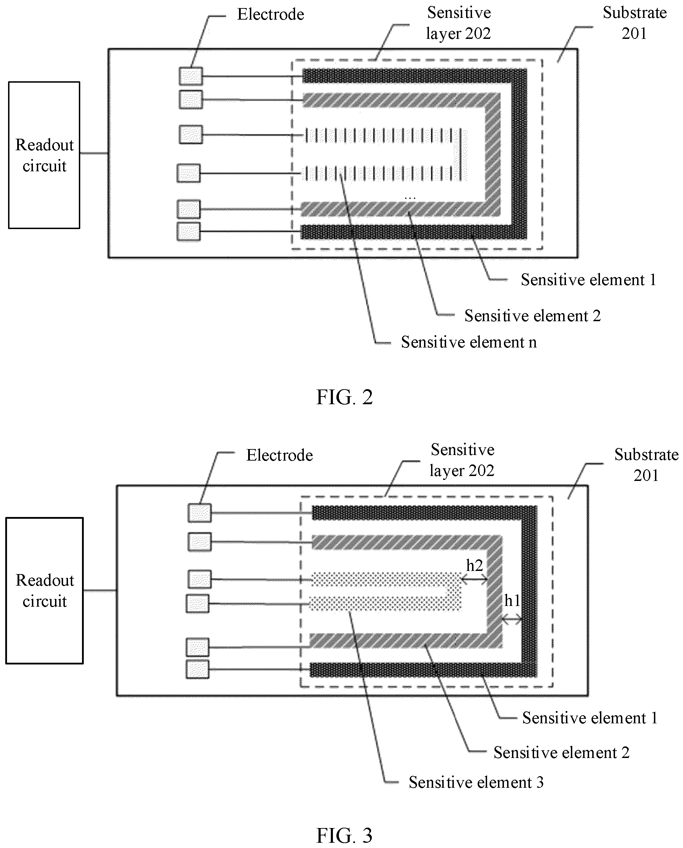

The following describes a multifunctional sensor provided in embodiments of this application. For details, refer to FIG. 2. FIG. 2 is a diagram of a structure of a multifunctional sensor according to an embodiment of this application.

The diagram of the structure is a top view. The multifunctional sensor may be disposed on a surface of a device, to improve measurement sensitivity to an external ambient signal. For example, the multifunctional sensor may be specifically used on a surface of a wearable device, for example, a watch, a band, a headset, or a cardiotachometer. Alternatively, the multifunctional sensor may be used in a device (for example, an electronic device), to improve measurement sensitivity for detecting temperature, humidity, pressure, or the like in the device. This is not specifically limited in this application. For ease of description, in the following embodiments of this application, an example in which the multifunctional sensor is disposed on a surface of a device is used for description. The multifunctional sensor includes a substrate 201 and a sensitive layer 202. The sensitive layer 202 is located on the substrate 201. For example, the sensitive layer 202 may be generated on the substrate 201 through sputtering, or the sensitive layer 202 may be deployed on the substrate 201 through bonding, or the sensitive layer 202 may be generated on the substrate 201 through deposition. An implementation of deploying the sensitive layer 202 on the substrate 201 is not specifically limited in this application.

In addition, in this embodiment of this application, the sensitive layer 202 includes at least two different sensitive elements, and the at least two different sensitive elements are located on one plane of the sensitive layer. For example, a sensitive element 1, a sensitive element 2, ..., and a sensitive element n are shown in FIG. 2, where n is greater than or equal to 2. The "different" means that the sensitive elements are made of different materials and are configured to respond to at least two different types of ambient signals. For example, the ambient signal may be temperature (for example, body temperature of a person or temperature of air in an environment), humidity (for example, humidity of a person or humidity of air in an environment), pressure, or the like. This is not specifically limited in this application, and is determined based on a material of which the sensitive element is made. The at least two different sensitive elements are in linear structures, and every two of the linear structures are arranged at equal spacings. In some implementations of this application, at least two different sensitive materials may be made into the linear structures through photoetching, or at least two different sensitive materials may be made into the linear structures through masking. An implementation of making the sensitive elements into the linear structure is not specifically limited in this application.

It should be noted herein that, that every two of the linear structures are arranged at equal spacings means that distances between lines corresponding to any two sensitive elements are equal everywhere (to be specific, the lines are parallel). For example, distances between lines formed by the sensitive element 1 and the sensitive element 2 are equal everywhere. Assuming that a spacing is h1, the distances between the two lines are equal to h1 everywhere. However, it is not required that the distances between the two lines are all h1. For example, as shown in FIG. 3, it is assumed that the multifunctional sensor includes three sensitive elements: a sensitive element 1, a sensitive element 2, and a sensitive element 3, where a distance between lines formed by the sensitive element 1 and the sensitive element 2 is h1, a distance between lines formed by the sensitive element 2 and the sensitive element 3 is h2, and h2≠h1. In some other implementations of this application, h2 may alternatively be equal to h1. This is not limited in this application. It should be noted herein that, that every two of the linear structures are arranged at equal spacings means that distances between lines corresponding to any two sensitive elements are equal everywhere (to be specific, the lines are parallel). The "equal everywhere" herein means being equal everywhere in a theoretical case. In actual application, when a fluctuation of distances between lines corresponding to any two sensitive elements is within a preset error range (for example, ±0.5 mm), it may also be considered that the distances are equal everywhere. For example, distances between lines formed by the sensitive element 1 and the sensitive element 2 are equal everywhere. Assuming that a spacing is h1, theoretically, the distances between the two lines need to be equal to h1 everywhere. If an allowed error range of ±0.5 mm is set, when the distances between the two lines are within a range of [-0.5 mm+h1, 0.5 mm+h1], it may also be considered that the distances between the lines formed by the sensitive element 1 and the sensitive element 2 are equal everywhere.

It should be further noted that, in some implementations of this application, a linear structure corresponding to each sensitive element may be any linear structure, and may be a line formed by a plurality of line segments, as shown in FIG. 2 and FIG. 3, or may be in a serpentine shape, or may be a line in any shape. A line shape of the sensitive element is not limited in this application. It should be further noted that an objective of making the sensitive elements into parallel linear structures is to keep strong consistency of the multifunctional sensor in a structural design, to be specific, to ensure that different sensitive elements sense strongly consistent external stimulation in heat conduction and the like. In some implementations of this application, the strong consistency may be manifested as follows: Locations of the sensitive elements are quite close, and shapes of the sensitive elements are strongly consistent. It should be further noted herein that, to make measurement sensitivity higher, a thickness of the linear structure corresponding to each sensitive element may also be set to meet a specific requirement. For example, the thickness of the linear structure ranges from 1 μm to 1000 μm.

In addition, in this embodiment of this application, every two of the at least two different sensitive elements are insulated from each other. Specifically, a structural relationship between different sensitive elements may be as follows: The sensitive elements are spaced at a specific distance or stacked on the basis of ensuring insulation. The different sensitive elements may be specifically manifested in various properties, for example, inconsistent response to temperature (different temperature coefficients of resistance), inconsistent response to humidity, and inconsistent response to pressure. Specifically, one sensitive element has different response sensitivity to different types of ambient signals, for example, some materials have high sensitivity to temperature but low sensitivity to humidity; and different sensitive elements have different response sensitivity to one type of ambient signal, for example, some materials have high sensitivity to temperature, and some materials have low sensitivity to temperature.

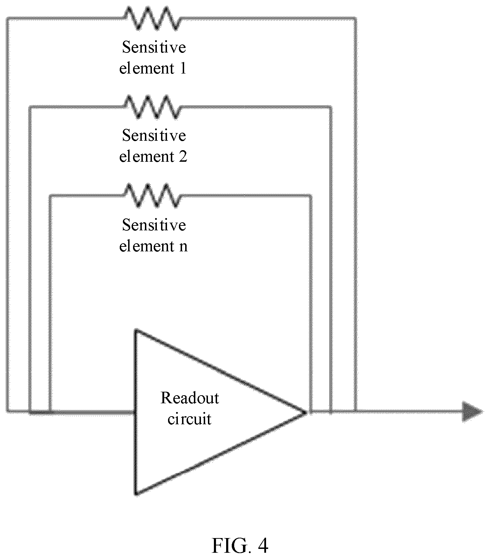

In addition, the sensitive layer 202 further includes at least two electrode pairs for connecting to a readout circuit. One electrode pair corresponds to one sensitive element (this is a one-to-one correspondence). One electrode pair includes one positive electrode and one negative electrode that are respectively connected to two ends of a line corresponding to a sensitive element that corresponds to the electrode pair. For example, one positive electrode and one negative electrode that are included in a target electrode pair may be respectively connected to two ends of a linear structure corresponding to a target sensitive element. The target electrode pair is one of the at least two electrode pairs. The target sensitive element is one of the at least two different sensitive elements. As shown in FIG. 2, two electrodes of an electrode pair are respectively connected to two ends of a linear structure corresponding to the sensitive element 1. Connection modes for the sensitive element 2, ..., and the sensitive element n are similar. For details, refer to FIG. 2. Details are not described herein again. The readout circuit is configured to obtain measured values respectively corresponding to the at least two different sensitive elements. One sensitive element corresponds to one measured value (this is a one-to-one correspondence). A diagram of a structure of an application circuit between the readout circuit and the sensitive elements in the multifunctional sensor may be shown in FIG. 4.

It should be noted that, in some implementations of this application, the measured value obtained by the readout circuit may be a resistance value, a capacitance value, a voltage value, a current value, or the like. This is specifically determined based on a type of the multifunctional sensor. For example, assuming that the multifunctional sensor is a resistive sensor, the measured value obtained by the readout circuit is a resistance value. Similarly, assuming that the multifunctional sensor is a capacitive sensor, the measured value obtained by the readout circuit is a capacitance value. A case in which the measured value is a voltage value or a current value is similar. Details are not described herein again.

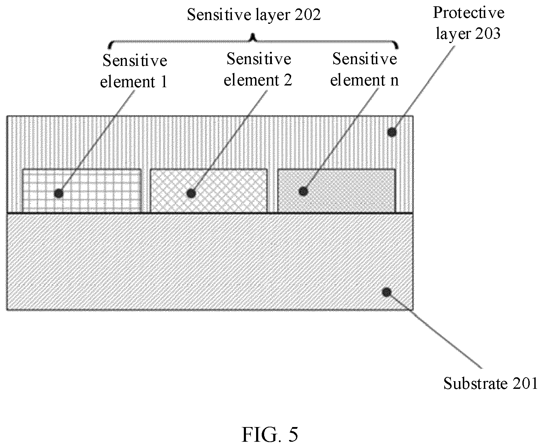

It should be further noted that, in some implementations of this application, in addition to the substrate 201 and the sensitive layer 202, the multifunctional sensor may further include a protective layer 203. For details, refer to FIG. 5. FIG. 5 is a side view. The protective layer 203 may be one or more layers of thin film materials, to be specific, a thin film protective layer formed on the substrate 201 and the sensitive layer 202. A material of the protective layer 203 may include but is not limited to aluminum oxide, chromium oxide, and the like, and is configured to protect the substrate 201 and the sensitive layer 202. For example, during preparation of the multifunctional sensor, the protective layer may protect a piezoelectric material (assuming that one of the sensitive elements is the piezoelectric material) and a corresponding electrode from oxidation during subsequent high-temperature polycrystalline silicon deposition.

It should be further noted that, in some implementations of this application, the substrate 201 may be made of a plurality of materials, including but not limited to silicon, sapphire, stainless steel, plastic, and the like. In addition, in some other implementations of this application, a structural shape of the substrate 201 is not limited either, and includes but is not limited to a plane and a curved surface. This is specifically determined based on a shape of the surface of the device on which the multifunctional sensor is used, because the multifunctional sensor is deployed on the surface of the device.

It should be further noted that, in some implementations of this application, because the sensitive layer 202 includes at least two different sensitive elements, the sensitive layer 202 includes a plurality of materials sensitive to different to-be-measured physical properties. The materials include but are not limited to metal, an alloy, an organic polymer material, and the like. For example, the materials include but are not limited to a temperature-sensitive platinum Pt or NTC material, a pressure-sensitive constantan material, and the like. It should be noted that the at least two different sensitive elements included in the sensitive layer 202 may belong to different subtypes of one type of material. In an example, it is assumed that the sensitive layer 202 includes two different sensitive elements that both belong to a metal material but respectively belong to copper and platinum in the type of metal. In another example, it is assumed that the sensitive layer 202 includes two different sensitive elements that both belong to an alloy material but respectively belong to a copper-nickel alloy (also referred to as constantan) and a nickel-chromium-iron alloy in the type of alloy. The at least two different sensitive elements included in the sensitive layer 202 may alternatively belong to different types of materials. In an example, it is assumed that the sensitive layer 202 includes two different sensitive elements that respectively belong to copper in a metal material and a nickel-chromium-iron alloy in an alloy material. Detailed examples are not described herein again.

It should be further noted that, in some implementations of this application, the readout circuit may be located in the device, and the device may further include a calculation module. The readout circuit is connected to the calculation module. The calculation module is configured to calculate values of the at least two different types of ambient signals based on transform coefficients respectively corresponding to the at least two different sensitive elements and the measured values that respectively correspond to the at least two different sensitive elements and that are obtained by the readout circuit. One sensitive element corresponds to a transform coefficient for the sensitive element, and the transform coefficient may be pre-calculated.

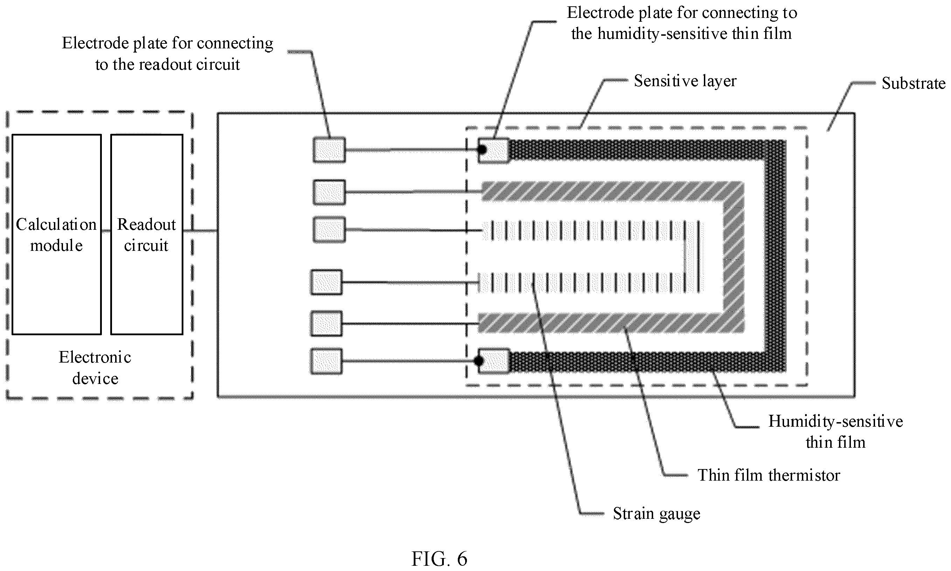

For ease of understanding a calculation process of the calculation module, a specific example is used below for description. FIG. 6 is a top view of an example multifunctional sensor according to an embodiment of this application. The multifunctional sensor includes a substrate and a sensitive layer. The substrate may be a sapphire substrate. In this example, it is assumed that the sensitive layer includes three different sensitive elements: a thin film thermistor, a pressure sheet, and a humidity-sensitive thin film. A pair of electrode plates for the humidity-sensitive thin film are further disposed at two ends of a linear structure corresponding to the humidity-sensitive thin film. The sensitive layer further includes an electrode plate for connecting to a readout circuit. In this embodiment of this application, an electrode plate with any function may be prepared by depositing or sputtering metal on the substrate. An electrode may be made of a gold or copper material or the like, or the region may serve only as a contact point, and the readout circuit or the humidity-sensitive thin film is connected by using a medium, for example, sintered conductive ceramic, as an electrode. Different sensitive elements on the substrate may be combined with the substrate through deposition, sputtering, bonding, or the like. The thin film thermistor may be made of temperature-sensitive platinum metal, a negative temperature coefficient material, or the like. This is not specifically limited in this application. The pressure sheet may be made of pressure-sensitive constantan, a copper-nickel alloy, a carbon chromium alloy, an iron-chromium-aluminum alloy, a nickel-chromium-iron alloy, platinum, a platinum alloy, or the like. This is not specifically limited in this application. The humidity-sensitive thin film may be an organic polymer humidity-sensitive thin film or various media immersed in a lithium chloride solution. This is not specifically limited in this application.

The thin film protective layer (not shown in FIG. 6) formed on the substrate and the sensitive layer may be an aluminum oxide thin film for protecting a piezoelectric material and an electrode from oxidation during subsequent high-temperature polycrystalline silicon deposition.

Linear structures, made of a plurality of materials, of the sensitive layer are arranged at equal intervals, to maximize consistency between sensitive regions of a plurality of sensitive materials in a to-be-measured region. A spacing between different linear structures may be designed based on an actual case. For example, if the to-be-measured region has strong consistency in a direction A and has a difference in another direction B, parallel lines or nonlinear patterns along the direction A may be simplified during design. In addition, when external conditions in the to-be-measured region are consistent, linear structures or nonlinear patterns arranged as close as possible may be obtained through simplification during design.

It is assumed that the multifunctional sensor shown in FIG. 6 is a resistance value sensor. A resistance value $R_A$ is measured by a sensitive element A (namely, the thin film thermistor in FIG. 6) most sensitive to temperature. A resistance value $R_B$ is measured by a sensitive element B (namely, the humidity-sensitive thin film in FIG. 6) most sensitive to humidity. A resistance value $R_C$ is measured by a sensitive element C (namely, the pressure sheet in FIG. 6) most sensitive to pressure. It is known that $R_A$ is related to temperature $T_A$, humidity $H_A$, and pressure $S_A$ at the sensitive element A, as shown in the following formula (1):

$$R_A = x_{aT} \times T_A + x_{aH} \times H_A + x_{aS} \times S_A \qquad (1)$$

$R_A$ indicates a resistance variation at the sensitive element A. $T_A$ indicates temperature at the sensitive element A. $x_{aT}$ indicates a coefficient of transformation between the resistance $R_A$ and the temperature $T_A$. $H_A$ indicates humidity at the sensitive element A. $x_{aH}$ indicates a coefficient of transformation between the resistance $R_A$ and the humidity $H_A$. $S_A$ indicates a value of pressure at the sensitive element A. $x_{aS}$ indicates a coefficient of transformation between the resistance $R_A$ and the value of pressure $S_A$. $x_{aT}$, $x_{aH}$, and $x_{aS}$ are parameters of the sensitive element that may be calibrated when variables are controlled, and are known values that may be pre-measured and pre-calculated.

It should be noted that, in some implementations of this application, $x_{aT}$ may be expressed as a constant. For example, $x_{aT}=k$, where k is a constant. Alternatively, $x_{aT}$ may be expressed as a dependent variable of the temperature $T_A$. For example, $x_{aT} = f(T_A)$. Parameters in $f(T_A)$ other than $T_A$ are constants. A specific expression of $x_{aT}$ is determined based on a measurement and calculation result. Details are not described herein. Cases for $x_{aH}$ and $x_{aS}$ are also similar. Details are not described herein again.

Likewise, a formula (2) and a formula (3) that are related to $R_B$, $R_C$ may be obtained:

$$R_B = x_{bT} \times T_B + x_{bH} \times H_B + x_{bS} \times S_B \qquad (2)$$

$$R_C = x_{cT} \times T_C + x_{cH} \times H_C + x_{cS} \times S_C \qquad (3)$$

Further, resistance values $R_A$, $R_B$, and $R_C$ of the three sensitive elements A, B, and C may be obtained by the readout circuit. It can be learned from the foregoing method for designing the sensitive layer and the to-be-measured region that the three sensitive elements A, B, and C are subject to strongly consistent impact of temperature, humidity, and pressure. To be specific, $T_A = T_B = T_C = T'$, $H_A = H_B = H_C = H'$, and $S_A = S_B = S_C = S'$. Therefore, the following equation set (4) may be obtained:

$$\begin{cases} R_A = x_{aT} \times T' + x_{aH} \times H' + x_{aS} \times S' \\ R_B = x_{bT} \times T' + x_{bH} \times H' + x_{bS} \times S' \\ R_C = x_{cT} \times T' + x_{cH} \times H' + x_{cS} \times S' \end{cases} \qquad (4)$$

In the foregoing equation set, only T', H', and S' are unknown values. The equations have solutions under a condition that the three sensitive elements A, B, and C have different response to temperature, humidity, and pressure, and the response has no linear relationship. More accurate values of T', H', and S' (namely, values of ambient signals) may be obtained by solving the equations.

In this embodiment of this application, an equation set is established by combining impact of a plurality of factors on observed values, to implement data decoupling between a plurality of sensitive elements. In this way, values of a plurality of ambient signals can be obtained at a time, and common impact of these types of to-be-measured ambient data on a plurality of sensitive elements is also eliminated based on a difference between sensitivity of different sensitive elements. For example, temperature affects a sensitive element sensitive to humidity, but more seriously affects a sensitive element sensitive to temperature. Two groups of observed values are corrected based on each other to obtain a more accurate observed humidity value that is not affected by temperature and a more accurate observed temperature value that is not affected by humidity.

It should be noted that, in some implementations of this application, the calculation module may calculate values of all ambient signals, for example, the values of T', H', and S', at a time; or may calculate a needed value of an ambient signal according to a requirement. For example, in some application scenarios, if only values of the ambient signals T' and H' are needed, the needed values of the ambient signals may be obtained based on any two measured values of the resistance values $R_A$, $R_B$, and $R_C$. The following equation set (5) shows how to obtain a needed value of an ambient signal based on $R_A$ and $R_C$:

$$\begin{cases} R_A = x_{aT} \times T' + x_{aH} \times H' \\ R_C = x_{cT} \times T' + x_{cH} \times H' \end{cases} \qquad (5)$$

In the foregoing implementations of this application, each sensitive element included in the multifunctional sensor is in a linear structure. Different types of sensitive elements are designed as linear structures at equal spacings to ensure consistency of the different sensitive elements in a sensing region. The multifunctional sensor in this structure may be used in various devices. However, in some other implementations of this application, if sensitive elements are close to each other, the sensitive elements may alternatively not be limited to a linear structure on the premise that consistency of the different sensitive elements in a sensing region can be ensured.

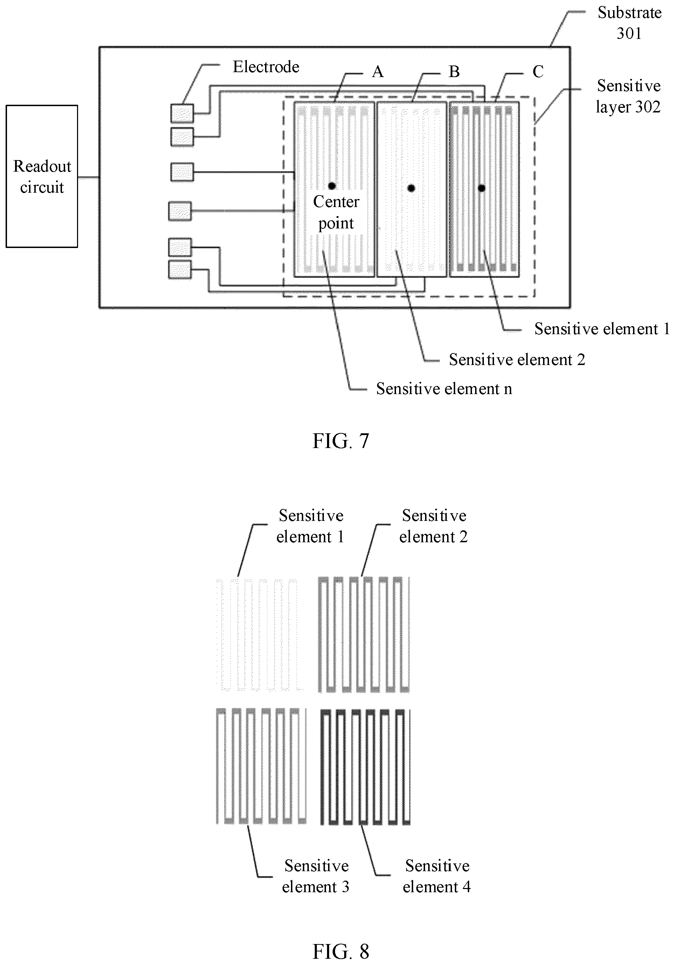

For details, refer to FIG. 7. FIG. 7 is a diagram of another structure of a multifunctional sensor according to an embodiment of this application. The diagram of the structure is a top view. The multifunctional sensor may be disposed on a surface of a device, to improve measurement sensitivity to an external ambient signal. For example, the multifunctional sensor may be specifically used on a surface of a wearable device, for example, a watch, a band, a headset, or a cardiotachometer. Alternatively, the multifunctional sensor may be used in a device (for example, an electronic device), to improve measurement sensitivity for detecting temperature, humidity, pressure, or the like in the device. This is not specifically limited in this application. For ease of description, in the following embodiments of this application, an example in which the multifunctional sensor is disposed on a surface of a device is used for description. The multifunctional sensor includes a substrate 301 and a sensitive layer 302. The sensitive layer 302 is located on the substrate 301. For example, the sensitive layer 302 may be generated on the substrate 301 through sputtering, or the sensitive layer 302 may be deployed on the substrate 301 through bonding, or the sensitive layer 302 may be generated on the substrate 301 through deposition. An implementation of deploying the sensitive layer 302 on the substrate 301 is not specifically limited in this application.

In addition, in this embodiment of this application, the sensitive layer 302 includes at least two different sensitive elements, and the at least two different sensitive elements are located on one plane of the sensitive layer 302. For example, a sensitive element 1, a sensitive element 2, ..., and a sensitive element n are shown in FIG. 7, where n is greater than or equal to 2. The "different" means that the sensitive elements are made of different materials and are configured to respond to at least two different types of ambient signals. For example, the ambient signal may be temperature (for example, body temperature of a person or temperature of air in an environment), humidity (for example, humidity of a person or humidity of air in an environment), pressure, or the like. This is not specifically limited in this application, and is determined based on a material of which the sensitive element is made. The at least two different sensitive elements are located in at least two different regions on the substrate 301, and one sensitive element is located in one region. For example, it is assumed that there are three sensitive elements: a sensitive element 1, a sensitive element 2, and a sensitive element 3. In this case, correspondingly, there are three different regions (to be specific, the regions have no intersection) on the substrate 301: a region A, a region B, and a region C. Each sensitive element is located in one region, and a distance between center points of the at least two different regions is less than a first preset threshold. The first preset threshold may be set according to a requirement. For example, the first preset threshold is not greater than 1 centimeter.

It should be noted that the region is a region with a diameter greater than a preset value (not including a region in a linear shape). For example, a value range of a diameter of each region may be set to 0.1 mm to 100 mm. A specific range may be set based on actual application. This is not limited herein. In addition, every two of the at least two different sensitive elements are insulated from each other; one sensitive element has different response sensitivity to different types of ambient signals, for example, some materials have high sensitivity to temperature but low sensitivity to humidity; and different sensitive elements have different response sensitivity to one type of ambient signal, for example, some materials have high sensitivity to temperature, and some materials have low sensitivity to temperature. In addition, the sensitive layer 302 further includes at least two electrode pairs for connecting to a readout circuit. One electrode pair corresponds to one sensitive element (this is a one-to-one correspondence). One electrode pair includes one positive electrode and one negative electrode that are respectively connected to two ends of a line corresponding to a sensitive element that corresponds to the electrode pair. For example, one positive electrode and one negative electrode that are included in a target electrode pair may be respectively connected to two ends of a linear structure corresponding to a target sensitive element. The target electrode pair is one of the at least two electrode pairs. The target sensitive element is one of the at least two different sensitive elements. The readout circuit is configured to obtain measured values respectively corresponding to the at least two different sensitive elements. One sensitive element corresponds to one measured value (this is a one-to-one correspondence).

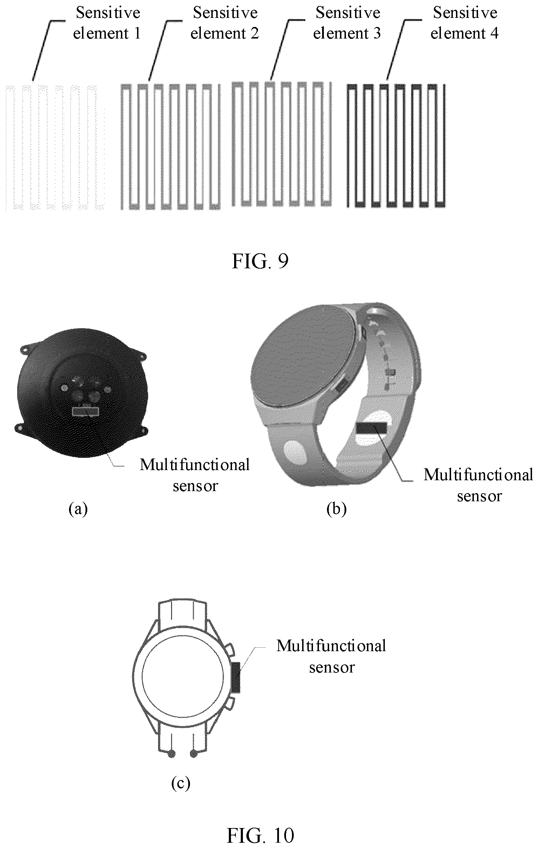

It should be further noted that, in some implementations of this application, an arrangement manner in different regions on the substrate is not limited. FIG. 7 shows a side-by-side arrangement. In some implementations, an up-down side-by-side arrangement may alternatively be used. As shown in FIG. 8 and FIG. 9, assuming that there are a total of four sensitive elements, the four sensitive elements may be arranged in a manner shown in FIG. 8, or may be arranged in a manner shown in FIG. 9. An arrangement manner is not specifically limited in this application, provided that a condition that the distance between the center points of the at least two different regions is less than the first preset threshold is met.

It should be further noted that shapes of all the sensitive elements are linear structures in the diagrams in FIG. 7 to FIG. 9. In actual application, the sensitive element may be in various shapes, including but not limited to a linear shape, a polygonal shape, a circular shape, and an elliptic shape. Because a distance between center points is limited, a shape of the sensitive element may not be limited.

It should be further noted that, in this embodiment of this application, a calculation module may also be included. A specific function is similar to the function of the calculation module in the foregoing embodiment. Details are not described herein again.

It should be further noted that, in some implementations of this application, the measured value obtained by the readout circuit may be a resistance value, a capacitance value, a voltage value, a current value, or the like. This is specifically determined based on a type of the multifunctional sensor. For example, assuming that the multifunctional sensor is a resistive sensor, the measured value obtained by the readout circuit is a resistance value. Similarly, assuming that the multifunctional sensor is a capacitive sensor, the measured value obtained by the readout circuit is a capacitance value. A case in which the measured value is a voltage value or a current value is similar. Details are not described herein again.

It should be further noted that, in some implementations of this application, similar to the foregoing embodiment, in addition to the substrate 301 and the sensitive layer 302, the multifunctional sensor may further include a protective layer. (The protective layer is not shown in FIG. 7, and is similar to the protective layer 203 in FIG. 5. Refer to FIG. 5.) The protective layer may be one or more layers of thin film materials, to be specific, a thin film protective layer formed on the substrate 301 and the sensitive layer 302. A material of the protective layer may include but is not limited to aluminum oxide, chromium oxide, and the like, and is configured to protect the substrate 301 and the sensitive layer 302. For example, during preparation of the multifunctional sensor, the protective layer may protect a piezoelectric material (assuming that one of the sensitive elements is the piezoelectric material) and a corresponding electrode from oxidation during subsequent high-temperature polycrystalline silicon deposition.

It should be further noted that, in some implementations of this application, the substrate 301 may be made of a plurality of materials, including but not limited to silicon, sapphire, stainless steel, plastic, and the like. In addition, in some other implementations of this application, a structural shape of the substrate 301 is not limited either, and includes but is not limited to a plane and a curved surface. This is specifically determined based on a shape of the surface of the device on which the multifunctional sensor is used, because the multifunctional sensor is deployed on the surface of the device.

It should be further noted that, in some implementations of this application, because the sensitive layer 302 includes at least two different sensitive elements, the sensitive layer 302 includes a plurality of materials sensitive to different to-be-measured physical properties. The materials include but are not limited to metal, an alloy, an organic polymer material, and the like. For example, the materials include but are not limited to a temperature-sensitive platinum Pt or NTC material, a pressure-sensitive constantan material, and the like. It should be noted that the at least two different sensitive elements included in the sensitive layer 302 may belong to different subtypes of one type of material. In an example, it is assumed that the sensitive layer 302 includes two different sensitive elements that both belong to a metal material but respectively belong to copper and platinum in the type of metal. In another example, it is assumed that the sensitive layer 302 includes two different sensitive elements that both belong to an alloy material but respectively belong to a copper-nickel alloy (also referred to as constantan) and a nickel-chromium-iron alloy in the type of alloy. The at least two different sensitive elements included in the sensitive layer 302 may alternatively belong to different types of materials. In an example, it is assumed that the sensitive layer 302 includes two different sensitive elements that respectively belong to copper in a metal material and a nickel-chromium-iron alloy in an alloy material. Detailed examples are not described herein again.

A typical application scenario of the multifunctional sensor provided in the foregoing embodiments of this application is that the multifunctional sensor is deployed on a surface of a device. For example, the multifunctional sensor may be deployed on a surface of a wearable device (for example, a band, a watch, or a cardiotachometer). The multifunctional sensor may be in direct contact with a to-be-measured medium to implement most direct measurement and simultaneously obtain measured values such as temperature, pressure, and humidity. In addition, cross-talk between the measured values is filtered out, so that more sensitive and accurate data can be obtained, without impact of a package, a housing, or the like. For example, during temperature measurement, heat may be directly transmitted through a path from a to-be-measured object to the protective layer of the multifunctional sensor and then to the sensitive layer, without being conducted from a housing to a thermal pad and then to a packaging layer and then to the sensitive layer.

It should be noted that a location at which the multifunctional sensor is deployed on a surface of a device varies with the device. The following describes several typical application scenarios and deployment locations, including but not limited to:

(1) The device is a watch.

When the device is a watch (which may alternatively include a smart band), the multifunctional sensor may be disposed on an outer surface at the bottom of a body of the watch, for example, at a location at which an outer surface at the bottom of a body of a watch is in contact with skin in a sub-diagram (a) in FIG. 10. Alternatively, the multifunctional sensor may be disposed on an outer surface of a clasp of the watch, for example, an outer surface of a clasp of a watch in a sub-diagram (b) in FIG. 10. Alternatively, the multifunctional sensor may be disposed at a first preset location on a band of the watch, for example, at a location at which a side frame of a body of a watch is in contact with air in a sub-diagram (b) in FIG. 10. This is not specifically limited in this application.

(2) The device is a headset.

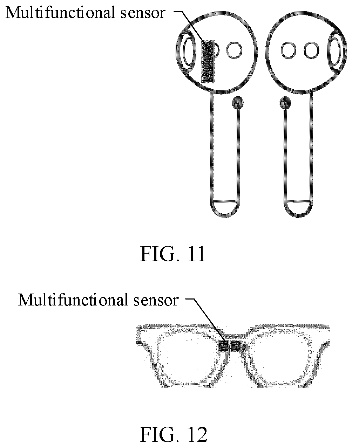

When the device is a headset (including a wireless headset, a wired headset, a bone conduction headset, and the like), the multifunctional sensor is disposed at a second preset location on a surface of a body of the headset, where the second preset location is a location at which the headset is in contact with a tragus when the headset is worn, for example, a location shown in FIG. 11.

(3) The device is glasses.

When the device is glasses (including bone conduction glasses), the multifunctional sensor is disposed at a third preset location on a surface of a nose pad of the glasses, where the third preset location is a location at which the glasses are in contact with a wing of a nose when the glasses are worn, for example, a location shown in FIG. 12.

It should be noted that, in some implementations of this application, in addition to the wearable devices such as the watch, the headset, and the glasses, the multifunctional sensor may be further used in all devices that need to measure an ambient signal. For example, the multifunctional sensor may be used in a vehicle, for example, in a steering wheel or a seat in the vehicle; or may be used in a mobile robot, for example, a robot vacuum cleaner or a wheeled robot; or may be used in a peripheral electronic device, for example, a mouse or a keyboard; or may be used in clothes, for example, an outdoor jacket, shoes, or trousers. An application scenario of the multifunctional sensor is not specifically limited in this application.

**Claims**

1. A multifunctional sensor, comprising:

   a substrate and a sensitive layer, wherein the sensitive layer is located on the substrate;
   the sensitive layer comprises at least two different sensitive elements for responding to at least two different types of ambient signals, the at least two different sensitive elements are in linear structures, the linear structures are arranged at equal spacings, every two of the at least two different sensitive elements are insulated from each other, and different sensitive elements have different response sensitivity to one type of ambient signal; and
   the sensitive layer further comprises at least two electrode pairs for connecting to a readout circuit, a positive electrode and a negative electrode that are comprised in a target electrode pair are respectively connected to two ends of a linear structure corresponding to a target sensitive element, the target electrode pair is one of the at least two electrode pairs, the target sensitive element is one of the at least two different sensitive elements, and the readout circuit is configured to obtain measured values respectively corresponding to the at least two different sensitive elements.

2. The sensor according to claim 1, wherein the readout circuit is connected to a calculation module, and the calculation module is configured to:
   calculate a value of a target ambient signal based on a target measured value and a target transform coefficient, wherein the target measured value is one or more of the measured values respectively corresponding to the at least two different sensitive elements, the target transform coefficient is one or more of transform coefficients respectively corresponding to the at least two different sensitive elements, the target ambient signal is one or more of the at least two different types of ambient signals, and the transform coefficient is preset.

3. The sensor according to claim 1 or 2, wherein the type of the ambient signal comprises at least any one of the following: temperature, humidity, and pressure.

4. The sensor according to any one of claims 1 to 3, wherein a spacing between adjacently arranged linear structures is not greater than 1 centimeter.

5. The sensor according to any one of claims 1 to 4, wherein the sensor is used on a surface of a device.

6. The sensor according to claim 5, wherein that the sensor is used on a surface of a device comprises:

   when the device is a watch, the sensor is disposed on an outer surface at the bottom of a body of the watch, or the sensor is disposed on an outer surface of a clasp of the watch, or the sensor is disposed at a first preset location on a band of the watch; or
   when the device is a headset, the sensor is disposed at a second preset location on a surface of a body of the headset, wherein the second preset location is a location at which the headset is in contact with a tragus when the headset is worn; or
   when the device is glasses, the sensor is disposed at a third preset location on a surface of a nose pad of the glasses, wherein the third preset location is a location at which the glasses are in contact with a wing of a nose when the glasses are worn.

7. The sensor according to any one of claims 1 to 6, wherein that the sensitive layer is located on the substrate comprises:

   the sensitive layer is generated on the substrate through sputtering; or
   the sensitive layer is deployed on the substrate through bonding; or
   the sensitive layer is generated on the substrate through deposition.

8. The sensor according to any one of claims 1 to 7, wherein that the at least two different sensitive elements are in linear structures comprises:

   the at least two different sensitive materials are made into the linear structures through photoetching; or
   the at least two different sensitive materials are made into the linear structures through masking.

9. The sensor according to any one of claims 1 to 8, wherein a type of the measured value comprises at least any one of the following:
a resistance, a capacitance, a voltage, and a current.

10. The sensor according to any one of claims 1 to 9, wherein the sensor further comprises:
a protective layer, configured to protect the substrate and the sensitive layer.

11. The sensor according to claim 10, wherein a material of the protective layer comprises at least any one of the following:
aluminum oxide and chromium oxide.

12. The sensor according to any one of claims 1 to 11, wherein a material of the sensitive layer comprises at least any one of the following:
metal, an alloy, and an organic polymer material.

13. The sensor according to any one of claims 1 to 12, wherein a material of the substrate comprises at least any one of the following:
a silicon wafer, sapphire, stainless steel, and plastic.

14. A multifunctional sensor, comprising:

a substrate and a sensitive layer, wherein the sensitive layer is located on the substrate;
the sensitive layer comprises at least two different sensitive elements for responding to at least two different types of ambient signals, the at least two different sensitive elements are located in at least two different regions on the substrate, one sensitive element is located in one region, a distance between center points of the at least two different regions is less than a first preset threshold, every two of the at least two different sensitive elements are insulated from each other, and different sensitive elements have different response sensitivity to one type of ambient signal; and
the sensitive layer further comprises at least two electrode pairs for connecting to a readout circuit, a positive electrode and a negative electrode that are comprised in a target electrode pair are respectively connected to two ends of a target sensitive element, the target electrode pair is one of the at least two electrode pairs, the target sensitive element is one of the at least two different sensitive elements, and the readout circuit is configured to obtain measured values respectively corresponding to the at least two different sensitive elements.

15. The sensor according to claim 14, wherein shapes of the at least two different sensitive elements comprise at least any one of the following:
a linear shape, a polygonal shape, a circular shape, and an elliptic shape.

16. The sensor according to claim 14 or 15, wherein the readout circuit is connected to a calculation module, and the calculation module is configured to:
calculate a value of a target ambient signal based on a target measured value and a target transform coefficient, wherein the target measured value is one or more of the measured values respectively corresponding to the at least two different sensitive elements, the target transform coefficient is one or more of transform coefficients respectively corresponding to the at least two different sensitive elements, the target ambient signal is one or more of the at least two different types of ambient signals, and the transform coefficient is preset.

17. The sensor according to any one of claims 14 to 16, wherein the type of the ambient signal comprises at least any one of the following:
temperature, humidity, and pressure.

18. The sensor according to any one of claims 14 to 17, wherein the first preset threshold is not greater than 1 centimeter.

19. The sensor according to any one of claims 14 to 18, wherein the sensor is used on a surface of a device.

20. The sensor according to claim 19, wherein that the sensor is used on a surface of a device comprises:

when the device is a watch, the sensor is disposed on an outer surface at the bottom of a body of the watch, or the sensor is disposed on an outer surface of a clasp of the watch, or the sensor is disposed at a first preset location on a band of the watch; or

when the device is a headset, the sensor is disposed at a second preset location on a surface of a body of the headset, wherein the second preset location is a location at which the headset is in contact with a tragus when the headset is worn; or

when the device is glasses, the sensor is disposed at a third preset location on a surface of a nose pad of the glasses, wherein the third preset location is a location at which the glasses are in contact with a wing of a nose when the glasses are worn.

21. The sensor according to any one of claims 14 to 20, wherein the sensor further comprises:
    a protective layer, configured to protect the substrate and the sensitive layer.

22. A device, wherein the device comprises the multifunctional sensor according to any one of claims 1 to 21.

23. The device according to claim 22, wherein the multifunctional sensor is disposed on a surface of the device.

24. The device according to claim 23, wherein that the sensor is disposed on a surface of the device comprises:

when the device is a watch, the sensor is disposed on an outer surface at the bottom of a body of the watch, or the sensor is disposed on an outer surface of a clasp of the watch, or the sensor is disposed at a first preset location on a band of the watch; or

when the device is a headset, the sensor is disposed at a second preset location on a surface of a body of the headset, wherein the second preset location is a location at which the headset is in contact with a tragus when the headset is worn; or

when the device is glasses, the sensor is disposed at a third preset location on a surface of a nose pad of the glasses, wherein the third preset location is a location at which the glasses are in contact with a wing of a nose when the glasses are worn.

Internal electronic component

The built-in temperature measurement component has slow heat conduction and is greatly affected by thermal pollution

Protective layer

Temperature measurement layer

Substrate layer

Thermally conductive adhesive

Housing of a watch

Environment

Skin

Diagram of heat conduction of a built-in temperature measurement component

FIG. 1

FIG. 2

FIG. 3

FIG. 4

Sensitive layer 202

Protective
layer 203

Sensitive
element 1

Sensitive
element 2

Sensitive
element n

Substrate 201

FIG. 5

FIG. 6

FIG. 7

FIG. 8

Sensitive element 1    Sensitive element 2    Sensitive element 3    Sensitive element 4

FIG. 9

Multifunctional sensor

(a)

Multifunctional sensor

(b)

Multifunctional sensor

(c)

FIG. 10

Multifunctional sensor

FIG. 11

Multifunctional sensor

FIG. 12

# EP 4 428 498 A1

## INTERNATIONAL SEARCH REPORT

| International application No. |
|---|
| **PCT/CN2022/130299** |

| **A.** | **CLASSIFICATION OF SUBJECT MATTER** |
|---|---|

G01D 21/02(2006.01)i

According to International Patent Classification (IPC) or to both national classification and IPC

| **B.** | **FIELDS SEARCHED** |
|---|---|

Minimum documentation searched (classification system followed by classification symbols)

G01L, G01K, G01D

Documentation searched other than minimum documentation to the extent that such documents are included in the fields searched

Electronic data base consulted during the international search (name of data base and, where practicable, search terms used)

CNTXT; WPABS; ENTXT; ENTXTC; WPABSC; VEN: 多功能, 敏感元件, 手环, 三, 湿度, 物理量, 温度, 多参数, 不同, 集成, 多, 灵敏度, 两, 参数, 手表, 传感, 压力, 传感元件, 传感器, 敏感度, sensor, two, three, multi, temperature, humidity, pressure, sensitivity,

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2000111368 A (NIPPON SOKEN, INC. et al.) 18 April 2000 (2000-04-18) description, paragraphs 18-38, and figures 1-9 | 1-24 |
| X | CN 203940940 U (JIANGSU MULTIDIMENSION TECHNOLOGY CO., LTD.) 12 November 2014 (2014-11-12) description, paragraphs 37-41, and figures 1-6 | 1-24 |
| X | CN 1974372 A (SHENYANG ACADEMY OF INSTRUMENTATION SCIENCE) 06 June 2007 (2007-06-06) description, p. 1, paragraph 2 from the bottom to p. 2, paragraph 4, and figures 1-7 | 1-24 |
| A | JP H09280911 A (TOYOTA MOTOR CORP.) 31 October 1997 (1997-10-31) entire document | 1-24 |
| A | US 2021102851 A1 (KONDOH H et al.) 08 April 2021 (2021-04-08) entire document | 1-24 |
| A | CN 112230763 A (XI'AN JIAOTONG UNIVERSITY) 15 January 2021 (2021-01-15) entire document | 1-24 |

☑ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 January 2023** | **20 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

26

**INTERNATIONAL SEARCH REPORT**

| | International application No. |
|---|---|
| | **PCT/CN2022/130299** |

C.    DOCUMENTS CONSIDERED TO BE RELEVANT

| Category* | Citation of document, with indication, where appropriate, of the relevant passages | Relevant to claim No. |
|---|---|---|
| A | CN 213738599 U (HANKING ELECTRONICS (LIAONING) CO., LTD.) 20 July 2021 (2021-07-20)<br>        entire document | 1-24 |

Form PCT/ISA/210 (second sheet) (January 2015)

**INTERNATIONAL SEARCH REPORT**
**Information on patent family members**

International application No.

**PCT/CN2022/130299**

| Patent document cited in search report | | | Publication date (day/month/year) | Patent family member(s) | | | Publication date (day/month/year) |
|---|---|---|---|---|---|---|---|
| JP | 2000111368 | A | 18 April 2000 | None | | | |
| CN | 203940940 | U | 12 November 2014 | None | | | |
| CN | 1974372 | A | 06 June 2007 | CN | 1974372 | B | 13 November 2013 |
| JP | H09280911 | A | 31 October 1997 | None | | | |
| US | 2021102851 | A1 | 08 April 2021 | JP | 2021060388 | A | 15 April 2021 |
| | | | | US | 11493392 | B2 | 08 November 2022 |
| CN | 112230763 | A | 15 January 2021 | None | | | |
| CN | 213738599 | U | 20 July 2021 | CN | 111483974 | A | 04 August 2020 |

Form PCT/ISA/210 (patent family annex) (January 2015)

**EP 4 428 498 A1**

**REFERENCES CITED IN THE DESCRIPTION**

**Patent documents cited in the description**

- CN 202111519419